**Europäisches Patentamt**

**European Patent Office**

**Office européen des brevets**

(19)

(11) Numéro de publication: **0 097 083**
**B1**

(12) # FASCICULE DE BREVET EUROPEEN

(45) Date de publication du fascicule du brevet:
16.09.87

(51) Int. Cl.⁴: **G 01 W 1/16**

(21) Numéro de dépôt: **83401134.8**

(22) Date de dépôt: **03.06.83**

(54) **Dispositif de détection d'orage.**

(30) Priorité: **09.06.82 FR 8210049**

(43) Date de publication de la demande:
**28.12.83 Bulletin 83/52**

(45) Mention de la délivrance du brevet:
**16.09.87 Bulletin 87/38**

(84) Etats contractants désignés:
**BE CH DE GB IT LI NL**

(56) Documents cités:
**FR - A - 2 432 719**
**FR - A - 2 476 849**
**US - A - 3 784 930**
**US - A - 4 072 896**
**US - A - 4 095 221**
**US - A - 4 205 267**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris**
**(FR)**

(72) Inventeur: **Berlandis, Jean-Pierre, 3, rue d'Alembert,**
**F-38000 Grenoble (FR)**

(74) Mandataire: **Mongrédien, André et al, c/o**
**BREVATOME 25, rue de Ponthieu, F-75008 Paris (FR)**

## Description

La présente invention concerne un dispositif de détection d'orage. Un tel dispositif est destiné à produire un signal d'alarme en cas de forte probabilité d'orage. Ce signal d'alarme peut être soit une alarme simple pour l'information des personnes, soit un signal de commande de divers dispositifs de protection.

Dans de nombreux cas où la foudre présente un danger pour le personnel ou les équipements, la connaissance de la probabilité d'un orage peut permettre de prendre les précautions appropriées. Ceci peut se produire lorsque des personnes sont amenées à travailler sur des installations émergeant de l'environnement ou des installations non pourvues d'équipements de protection contre la foudre, lorsque des explosifs sont manipulés à des fins civiles ou militaires, pendant des opérations de manipulation de combustibles liquides tels que le mazout ou l'essence, lorsque des appareils électroniques ne peuvent pas être complètement protégés des surtensions créées par la foudre...

La présente invention concerne donc un dispositif apte à prévenir d'un danger de foudre. La prévision obtenue grâce à ce dispositif peut toujours être améliorée par une interprétation plus soignée des signaux délivrés, par l'usage conjoint d'équipements annexes ou par la connaissance d'informations météorologiques. Toutefois le dispositif selon l'invention constitue une technique de prévision utilisable par du personnel sans qualification particulière; il peut signaler le danger d'apparition de la foudre même quand ce danger ne peut être déduit de l'aspect visuel des nuages ou d'autres mesures classiques.

On connaît, par le document US-A-4 205 267, un dispositif de détection d'un champ électrique correspondant au préambule de la revendication 1.

On connaît également un dispositif de détection d'orage, qui est décrit dans le brevet français FR-A-2 432 719 et qui mesure le champ électrique terrestre, encore appelé champ électrique atmosphérique, à l'aide d'un moulin à champ composé d'électrodes alternativement isolées du champ électrique terrestre et soumises à ce champ, par un écran conducteur relié à la masse et tournant à l'aide d'un moteur. Ce dispositif présente l'inconvénient d'être complexe, coûteux et peu fiable, du fait de son moteur.

La présente invention a pour objet un dispositif de détection d'orage qui ne présente pas l'inconvénient du dispositif précédent, notamment en ce qu'il est simple, bon marché et fiable. Il est facilement réalisable à l'aide d'un matériel commercialement disponible et ne comporte ni moteur rotatif, ni pièces en rotation.

De façon précise, la présente invention a pour objet un dispositif de détection d'un champ électrique, ce dispositif comprenant:
– des moyens détecteurs comportant:
. une première et une seconde surfaces conductrices de l'électricité, en regard et électriquement isolées l'une de l'autre, et présentant entre elles un écart, et
. des moyens de vibration aptes à vibrer suivant une direction donnée sous l'effet d'un courant électrique alternatif, rendus solidaires de la première et de la seconde surfaces et aptes à faire vibrer la première surface par rapport à la seconde, et
– des moyens électroniques de traitement de signaux issus des surfaces lorsque celles-ci vibrent dans le champ électrique,
ce dispositif étant caractérisé en ce que le champ électrique est le champ électrique atmosphérique, en ce que la première et la seconde surfaces sont rendues solidaires des moyens de vibration de façon que l'amplitude dudit écart puisse être comptée parallèlement à ladite direction et que, ainsi comptée, cette amplitude varie au cours du temps lorsque ladite vibration a lieu, en ce que les moyens électroniques sont prévus pour traiter et comparer, après traitement, à un seuil réglable de tension, une tension électrique alternative engendrée entre la première et la seconde surfaces conductrices par le champ électrique atmosphérique, lorsque ladite vibration a lieu, et en ce que le dispositif comprend en outre des moyens de signalisation du dépassement dudit seuil réglable par ladite tension électrique une fois traitée, de façon à pouvoir détecter un orage.

On sait en effet que par beau temps le champ électrique atmosphérique est de l'ordre de 100 à 150 V/m; à l'approche d'un nuage chargé électriquement susceptible d'engendrer un orage, ce champ croît brusquement pour atteindre et dépasser 10 kV/m. Il y a donc une grande différence entre le champ électrique atmosphérique de beau temps et le champ en période d'orage. L'expérience montre que, même par temps nuageux mais non orageux, il est très rare que la valeur de ce champ prenne des valeurs intermédiaires de l'ordre du kilovolt par mètre par exemple.

Les première et seconde surfaces conductrices forment les armatures d'un condensateur et des charges électriques de signes opposés sont respectivement créées sur ces deux surfaces conductrices placées dans le champ électrique atmosphérique, par ledit champ. Il existe donc une tension électrique entre ces surfaces conductrices, tension qui est d'une part proportionnelle au champ électrique atmosphérique et d'autre part alternative étant donné que la première surface vibre par rapport à l'autre.

A l'approche d'un orage, le champ électrique augmente, comme on l'a indiqué plus haut. Les charges électriques respectivement portées par les première et seconde surfaces conductrices augmentent donc en valeur absolue et il en est de même pour l'amplitude de la tension électrique alternative existant entre ces surfaces. Cette tension est traitée électroniquement et comparée à un seuil, et un signal est créé lorsque ce seuil est dépassé par la tension une fois traitée. Ce signal peut être un signal avertisseur, sonore ou lumineux, ou un signal de commande de dispositifs de protection contre la foudre. Grâce à l'invention, on dispose ainsi d'un appareil de détection efficace, fournissant une information pendant la période d'accumulation des charges électriques dans les nuages susceptibles d'engendrer les orages, avant l'apparition de tout éclair.

De préférence, les première et seconde surfaces conductrices sont tournées vers une direction verticale, c'est-à-dire vers le sol ou vers le ciel. En effet, la disposition générale des surfaces équipotentielles du champ électrique atmosphérique est horizontale.

Selon un mode de réalisation particulier du dispositif objet de l'invention, les moyens de vibration sont pourvus de deux bornes électriques d'alimentation en courant électrique alternatif, par application d'une tension électrique alternative entre ces bornes, l'une des deux bornes est électriquement reliée à la première surface conductrice et ladite tension électrique alternative engendrée par le champ électrique atmosphérique est recueillie entre les première et seconde surfaces conductrices.

Les moyens électroniques peuvent alors comporter des moyens pour déterminer la différence de phase entre ladite tension électrique alternative prévue pour être appliquée entre les bornes et ladite tension électrique alternative engendrée par le champ électrique atmosphérique, de façon à connaître le sens de ce champ.

Selon un autre mode de réalisation particulier, les moyens électroniques comportent en outre des moyens d'enregistrement des variations temporelles de la tension électrique alternative engendrée par le champ électrique atmosphérique.

De préférence, cet enregistrement est effectué pendant un temps suffisamment long comportant des périodes de beau temps et des orages. L'examen dudit enregistrement permet de régler le seuil.

Ce seuil est choisi réglable car il est très difficile de prérégler un seuil d'alarme pour le dispositif objet de l'invention. En effet, la valeur absolue du champ électrique atmosphérique est très difficilement mesurable. La mesure de ce champ est perturbée par le relief local, par la hauteur au-dessus du sol des moyens détecteurs, éventuellement par la présence de bâtiments, d'arbres, toutes causes qui déforment les lignes de champ. Par ailleurs, la tension électrique présente entre les première et seconde surfaces conductrices a une amplitude proportionnelle au champ mais il n'y a aucun moyen pratique de savoir a priori la valeur du coefficient de proportionnalité qui ne reste le même que tant que l'environnement du dispositif ne change pas. Ainsi, la sensibilité du dispositif selon l'invention est-elle fonction de sa hauteur, de son emplacement, etc... On ne peut donc prérégler le seuil d'alarme.

Les moyens de vibration peuvent être constitués par un cristal piézoélectrique commandé par une tension électrique alternative, la première et la seconde surfaces conductrices étant alors respectivement fixées sur les deux faces opposées du cristal piézoélectrique. Ils peuvent être également constitués par une bobine magnétique et par un aimant permanent prévu pour faire vibrer la bobine suivant ladite direction donnée, lorsque cette bobine est alimentée par ledit courant alternatif, les première et seconde surfaces conductrices étant alors respectivement rendues solidaires de la bobine et de l'aimant, de façon à présenter entre elles ledit écart. Mais de préférence, les moyens détecteurs sont constitués par un haut-parleur électrodynamique comportant une bobine magnétique, une membrane pourvue d'un revêtement métallique et rendue solidaire de cette bobine, un saladier électriquement conducteur et un aimant permanent rendu solidaire du saladier et prévu pour faire vibrer la bobine magnétique du haut-parleur lorsque celle-ci est alimentée par le courant électrique alternatif, les moyens de vibration sont constitués par la bobine magnétique et par l'aimant permanent du haut parleur, et la première et la seconde surfaces conductrices sont respectivement constituées par le revêtement métallique et par le saladier.

Enfin, de préférence, les moyens détecteurs sont placés dans un boîtier étanche à l'eau, de façon à être protégés de la pluie et, plus généralement, des intempéries.

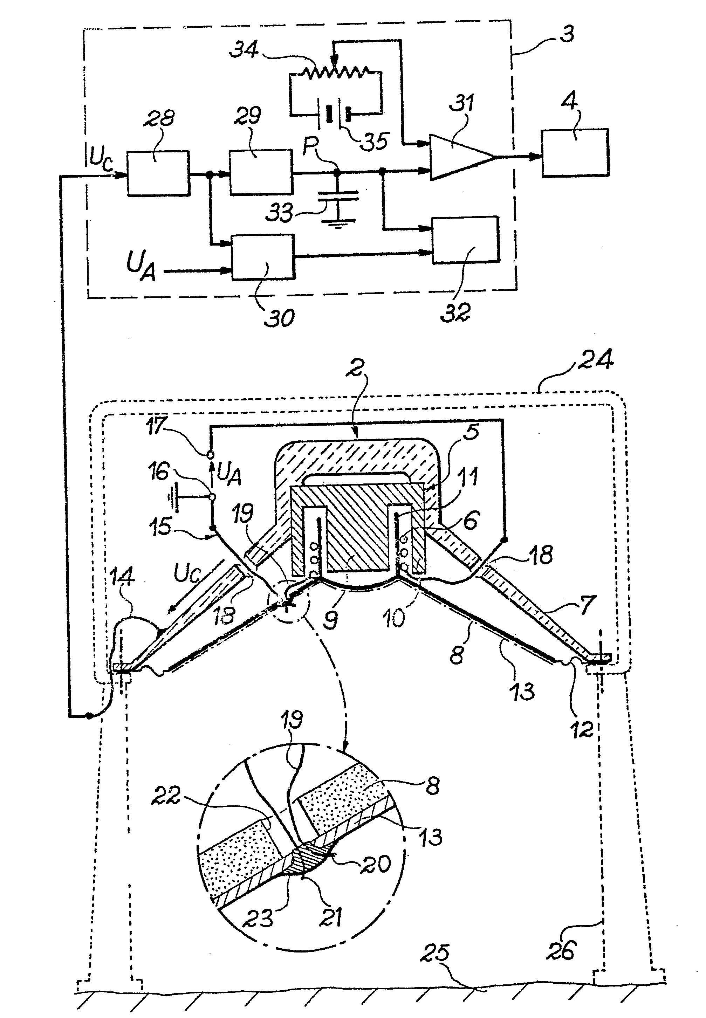

L'invention sera mieux comprise à la lecture de la description qui suit d'un exemple de réalisation donné à titre indicatif et non limitatif, en référence au dessin annexé.

Sur ce dessin, on a représenté schématiquement un mode de réalisation particulier du dispositif de détection d'orage objet de l'invention. Il comprend des moyens détecteurs 2, des moyens électroniques de traitement et de comparaison 3 et des moyens de signalisation 4.

Les moyens détecteurs 2 sont constitués par un haut-parleur électrodynamique comportant essentiellement, de façon connue dans l'état de la technique, un aimant permanent 5, une bobine magnétique mobile 6, un saladier métallique 7 et une membrane vibrante 8. L'aimant permanent 5 comporte un pôle central 9 et un pôle annulaire 10 qui délimitent l'entrefer de l'aimant. Dans cet entrefer, où règne un champ magnétique, se trouve la bobine magnétique mobile 6 capable de se mouvoir longitudinalement. L'aimant 5 est rendu solidaire du saladier 7 et la bobine 6 est disposée sur un manchon 11 rendu solidaire de la membrane 8. Enfin, cette membrane 8 est raccordée au saladier 7 par une suspension élastique 12 électriquement isolante, disposée sur le pourtour de cette membrane 8.

Le haut-parleur 2 est adapté à l'invention de la façon suivante: la membrane 8 est pourvue d'un revêtement métallique 13 qui la rend électriquement conductrice. Ce revêtement 13 est par exemple constitué par une laque ou une peinture d'argent déposée sur la membrane 8. De plus, un conducteur électrique 14 est soudé par l'une de ses extrémités au saladier 7. Enfin, une liaison électrique est établie entre la revêtement métallique 13 et le conducteur électrique 15 dont est constituée la bobine 6. Ce conducteur 15 constituant la bobine est pourvu d'un première extrémité 16 et d'une seconde extrémité 17 qui, après traversée du saladier 7 par des passages isolants 18 pratiqués dans ce dernier, débouchent à l'extérieur du haut-parleur 2 et constituent respectivement une première et une seconde bornes d'alimentation de la bobine 6 en courant électrique.

Pour établir ladite liaison électrique entre le revêtement 13 et le conducteur 15 constituant la bobine 6, on procède par exemple de la façon suivante: à la sortie de la bobine 6, une partie libre 19 de ce conducteur 15, partie conduisant à ladite première borne 16, est coupée, ce qui crée deux nouvelles extrémités 20 et 21 qui sont ensuite passées par un trou 22 pratiqué dans la membrane 8 et mises en contact électrique avec le revêtement métallique 13 à l'aide d'un point de soudure 23 déposé à la fois sur ces nouvelles extrémités 20 et 21 et sur le revêtement 13 pour assurer ledit contact. On rétablit ainsi la liaison électrique entre la bobine 6 et sa première borne 16. Cette première borne 16 est de plus mise à la masse. Lorsqu'on établit une différence de potentiel alternative $U_A$ entre les seconde et première bornes de la bobine 6 pour alimenter celle-ci en courant électrique, la seconde borne 17 se trouve ainsi portée à un potentiel alternatif $U_A$.

Le revêtement 13 et le saladier 7 constituent respectivement une première et une seconde surfaces conductrices, et l'ensemble formé par l'aimant 5 et par la bobine 6 constitue des moyens de vibration de la membrane 8, et donc du revêtement 13, par rapport au saladier 7.

Le haut-parleur 2 est placé dans un boîtier 24 étanche à l'eau de pluie. Ce boîtier est maintenu à environ 1 à 2 mètres du sol 25 grâce à un support 26. De plus, le haut-parleur 2 est disposé dans le boîtier 24 de telle façon que sa membrane 8 soit tournée vers le sol 25. Par ailleurs, le haut-parleur 2 est, de préférence, situé en dehors de tout bâtiment, arbre, pylône, point haut...

Les moyens électroniques 3 de traitement et de comparaison comprennent essentiellement un amplificateur 28, une cellule redresseuse 29, un détecteur de phase 30, un comparateur à seuil 31 et des moyens d'enregistrement 32. L'entrée de l'amplificateur 28 est électriquement reliée au saladier 7 par l'intermédiaire du conducteur 14. La sortie de cet amplificateur 28 est électriquement reliée, d'une part, à l'entrée de la cellule redresseuse 29, à diode et capacité par exemple, et d'autre part, à une entrée du détecteur de phase 30, connu dans l'état de la technique et dont le rôle sera expliqué plus loin. L'autre entrée de ce détecteur de phase 30 est portée au même potentiel alternatif $U_A$ que la seconde borne 17 d'alimentation de la bobine 6. La sortie de la cellule redresseuse 29 est électriquement reliée à une borne P d'un condensateur de filtrage 33 dont l'autre borne est mise à la masse. La borne P du condensateur 33 est électriquement reliée à une entrée du comparateur à seuil 31 dont le seuil est fixé par un potentiomètre 34 alimenté par un générateur continu 35. (L'autre entrée du comparateur 31 est électriquement reliée au curseur du potentiomètre 34.) La sortie de ce comparateur à seuil 31 est électriquement reliée aux moyens de signalisation 4. La borne P du condensateur 33 est également électriquement reliée à une entrée de l'enregistreur 32. Une autre entrée de ce dernier est électriquement reliée à la sortie du détecteur de phase 30.

Le fonctionnement du dispositif selon l'invention représenté sur le dessin annexé est le suivant: la tension alternative $U_A$ est appliquée entre les bornes 16 et 17 de la bobine, cette tension résultant par exemple du secteur 220V alternatif (fréquence: 50 Hz) convenablement transformé pour être adapté à la bobine. Par conséquent, la membrane 8 et son revêtement métallique 13 vibrent par rapport au saladier métallique 7. Or, ce dernier et le revêtement se comportent, dans le champ électrique atmosphérique, comme les deux armatures d'un condensateur chargé proportionnellement à ce champ électrique atmosphérique. Il existe donc une différence de potentiel alternative $U_C$ proportionnelle audit champ, entre le saladier 7 et le revêtement 13 qui, on le rappelle, est à la masse. Par conséquent, le saladier 7 se trouve porté à un potentiel alternatif $U_C$ et un signal correspondant à ce potentiel $U_C$ est transmis à l'amplificateur 28 par le conducteur électrique 14. Le signal est amplifié par cet amplificateur, puis redressé par la cellule redresseuse 29 et filtré par le condensateur 33. Ce signal est ensuite appliqué, d'une part, aux moyens d'enregistrement 32, par exemple constitués par un enregistreur graphique, et d'autre part, au comparateur à seuil 31 dont la sortie se trouve portée au niveau logique 0 si la tension d'entrée $U_C$ est inférieure au seuil, et au niveau logique 1 si la tension d'entrée $U_C$ est supérieure au seuil. Celui-ci est réglé, comme on l'a indiqué plus haut, à l'aide de l'enregistrement des variations de la tension $U_C$ en fonction du temps, effectué à l'aide de l'enregistreur 32.

Lorsque la sortie du comparateur 31 est portée au niveau logique 1, un signal est émis par les moyens 4 de signalisation. Ceux-ci sont par exemple aptes à émettre un signal sonore ou lumineux. Ces moyens 4 peuvent être également choisis de façon à émettre un signal électrique prévu pour commander un appareil de protection contre la foudre. Lorsque la sortie du comparateur 31 est portée au niveau logique 0, aucun signal n'est émis par les moyens 4 de signalisation.

Le détecteur de phase 30, par exemple réalisé à l'aide d'un amplificateur différentiel associé à un circuit à seuil, reçoit des signaux correspondant respectivement à la tension $U_C$ proportionnelle au champ électrique atmosphérique et à la tension $U_A$ d'alimentation de la bobine 6 et détermine la différence de phase entre lesdites tensions $U_A$ et $U_C$, par comparaison de celles-ci. Le résultat de la comparaison est représenté graphiquement grâce à l'enregistreur 32 et l'on peut donc déterminer facilement, grâce au dispositif selon l'invention, le sens du champ électrique atmosphérique, c'est-à-dire déterminer si ce champ est dirigé du ciel vers le sol ou en sens inverse, puisque dans l'un de ces deux cas, les tensions $U_A$ et $U_C$

sont en phase et que dans l'autre cas, elles sont en opposition de phase.

Bien entendu, les moyens électroniques 3 de traitement et de comparaison et les moyens 4 de signalisation peuvent être situés à proximité des moyens détecteurs 2 ou, au contraire, en être éloignés.

**Revendications**

1. Dispositif de détection d'un champ électrique, ce dispositif comprenant:
   - des moyens détecteurs (2) comportant:
     . une première (13) et une seconde (7) surfaces conductrices de l'électricité, en regard et électriquement isolées l'une de l'autre, et présentant entre elles un écart, et
     . des moyens (5, 6) de vibration aptes à vibrer suivant une direction donnée sous l'effet d'un courant électrique alternatif, rendus solidaires de la première (13) et de la seconde (7) surfaces et aptes à faire vibrer la première surface (13) par rapport à la seconde (7), et
   - des moyens électroniques (3) de traitement de signaux issus des surfaces lorsque celles-ci vibrent dans le champ électrique,
ce dispositif étant caractérisé en ce que le champ électrique est le champ électrique atmosphérique, en ce que la première (13) et la seconde (7) surfaces sont rendues solidaires des moyens de vibration de façon que l'amplitude dudit écart puisse être comptée parallèlement à ladite direction et que, ainsi comptée, cette amplitude varie au cours du temps lorsque ladite vibration a lieu, en ce que les moyens électroniques (3) sont prévus pour traiter et comparer, après traitement, à un seuil réglable de tension, une tension électrique alternative ($U_C$) engendrée entre la première (13) et la seconde (7) surfaces conductrices par le champ électrique atmosphérique, lorsque ladite vibration a lieu, et en ce que le dispositif comprend en outre des moyens (4) de signalisation du dépassement dudit seuil réglable par ladite tension électrique ($U_C$) une fois traitée, de façon à pouvoir détecter un orage.

2. Dispositif selon la revendication 1, caractérisé en ce que les première (13) et seconde (7) surfaces conductrices sont tournées vers une direction verticale.

3. Dispositif selon l'une quelconque des revendications 1 et 2, caractérisé en ce que les moyens (5, 6) de vibration sont pourvus de deux bornes électriques (16, 17) d'alimentation en courant électrique alternatif, par application d'une tension électrique alternative ($U_A$) entre ces bornes, en ce que l'une (16) des deux bornes est électriquement reliée à la première surface conductrice (13) et en ce que ladite tension électrique alternative ($U_C$) engendrée par le champ électrique atmosphérique est recueillie entre les première (13) et seconde (7) surfaces conductrices.

4. Dispositif selon la revendication 3, caractérisé en ce que les moyens électroniques (3) comportent des moyens (30) pour déterminer la différence de phase entre ladite tension électrique alternative ($U_A$) prévue pour être appliquée entre les bornes et ladite tension électrique alternative ($U_C$) engendrée par le champ électrique atmosphérique, de façon à connaître le sens de ce champ.

5. Dispositif selon l'une quelconque des revendications 1 à 4, caractérisé en ce que les moyens électroniques (3) comportent en outre des moyens (32) d'enregistrement des variations temporelles de la tension électrique alternative ($U_C$) engendrée par le champ électrique atmosphérique.

6. Dispositif selon l'une quelconque des revendications 1 à 5, caractérisé en ce que les moyens de vibration sont constitués par une bobine magnétique (6) et par un aimant permanent (5) prévu pour faire vibrer la bobine (6) suivant ladite direction donnée, lorsque cette bobine est alimentée par ledit courant alternatif, et en ce que la première (13) et la seconde (7) surfaces sont respectivement rendues solidaires de la bobine et de l'aimant de façon à présenter entre elles ledit écart.

7. Dispositif selon la revendication 6, caractérisé en ce que les moyens détecteurs (2) sont constitués par un haut-parleur électrodynamique comportant une bobine magnétique (6), une membrane (8) pourvue d'un revêtement métallique (13) et rendue solidaire de cette bobine (6), un saladier (7) électriquement conducteur et un aimant permanent (5) rendu solidaire du saladier (7) et prévu pour faire vibrer la bobine magnétique (6) du haut-parleur lorsque celle-ci est alimentée par le courant électrique alternatif, en ce que les moyens (5, 6) de vibration sont constitués par la bobine magnétique (6) et par l'aimant permanent (5) du haut-parleur et en ce que la première et la seconde surfaces conductrices sont respectivement constituées par le revêtement métallique (13) et par le saladier (7).

8. Dispositif selon l'une quelconque des revendications 1 à 7, caractérisé en ce que les moyens détecteurs (2) sont placés dans un boîtier (24) étanche à l'eau.

**Claims**

1. Device for detecting an electric field, comprising:
   - detector means (2) comprising:
     . first (13) and second (7) electrically conductive surfaces facing and electrically insulated from one another and spaced apart, and
     . vibration means (5, 6) adapted to vibrate in a given direction through the action of an alternating electric current, fastened to the first (13) and second (7) surfaces, and adapted to vibrate the first surface (13) relative to the second surface (7), and
   - electronic means (3) for processing signals emitted from the surfaces when the latter vibrate in the electrical field,
said device being characterized in that the electrical field is the atmospheric electrical field, in that the first surface (13) and the second surface (7) are fastened to the vibration means in such a manner that the amplitude of the space between them can be counted parallel to said direction and that, when thus counted, this amplitude varies in the course of time when this vibration occurs, in that the electronic means (3) are designed to process and, after the processing, to compare with an adjustable voltage threshold an alternating voltage ($U_C$) generated between the first (13) and second (7) conductive surfaces by the atmospheric electrical field when said vibration takes place, and in that the device further comprises means (4) for signalling the exceeding of said adjustable threshold by said voltage ($U_C$) after it has been processed, in such a manner as to permit detection of a thunderstorm.

2. Device according to Claim 1, characterized in that the first (13) and second (7) conductive surfaces are turned towards a vertical direction.

3. Device according to either of Claims 1 and 2, characterized in that the vibration means (5, 6) are provided with two electrical terminals (16, 17) for supplying an alternating electric current through the application of an alternating voltage ($U_A$) between said terminals, in that one (16) of the two terminals is connected electrically to the first conductive surface (13), and in that said alternating voltage ($U_C$) generated by the atmospheric electrical field is collected between the first (13) and the second (7) conductive surfaces.

4. Device according to Claim 3, characterized in that the electronic means (3) comprise means (30) for determining the phase difference between said alternating voltage ($U_A$) provided for application between the terminals and said alternating voltage ($U_C$) generated by the atmospheric electrical field, in such a manner as to enable the direction of this field to be known.

5. Device according to any one of Claims 1 to 4, characterized in that the electronic means (3) also comprise means (32) for recording variations in time of the alternating voltage ($U_C$) generated by the atmospheric electrical field.

6. Device according to any one of Claims 1 to 5, characterized in that the vibration means consist of a magnetic coil (6) and a permanent magnet (5) designed to vibrate the coil (6) in said given direction when said coil is fed with said alternating current, and in that the first surface (13) and the second surface (7) are fastened respectively to the coil and the magnet in such a manner as to form between them the aforesaid space.

7. Device according to Claim 6, characterized in that the detector means (2) are composed of an electrodynamic loudspeaker comprising a magnetic coil (6), a diaphragm (8) provided with a metallic coating (13) and fixed to said coil (6), an electrically conductive frame (7), and a permanent magnet (5) fastened to the frame (7) and designed to vibrate the loudspeaker magnegic coil (6) when the latter is fed with the alternating electric current, in that the vibration means (5, 6) consist of the magnetic coil (6) and the permanent magnet (5) of the loudspeaker, and in that the first second conductive surfaces consist respectively of the metallic coating (13) and the loudspeaker frame (7).

8. Device according to any one of Claims 1 to 7, characterized in that the detector means (2) are disposed in a watertight casing (24).

## Patentansprüche

1. Vorrichtung zum Erkennen eines elektrischen Feldes, enthaltend:

eine Detektoreinrichtung (2) bestehend aus:

einer ersten (13) und einer zweiten (7) elektrisch leitfähigen Oberfläche, die einander gegenüberstehen und elektrisch voneinander isoliert sind und zwischen sich einen Abstand aufweisen, und

eine Vibrationseinrichtungen (5, 6), die dazu eingerichtet ist, unter der Wirkung eines elektrischen Wechselstromes in einer gegebenen Richtung zu vibrieren, mit der ersten (13) und der zweiten (7) Oberfläche fest verbunden ist und dazu eingerichtet ist, die erste Oberfläche (13) gegenüber der zweiten (7) zum Vibrieren zu bringen, und

elle elektronische Behandlungseinrichtung (3) für die Verarbeitung von Signalen, die von den Oberflächen abgegeben werden, wenn diese in dem elektrischen Feld vibrieren,

dadurch gekennzeichnet, dass das elektrische Feld das atmosphärische elektrische Feld ist und dass die erste (13) und die zweite (7) Oberfläche mit der Vibrationseinrichtung fest verbunden sind derart, dass die Weite des genannten Zwischenraumes als parallel zur genannten Richtung gerechnet werden kann und dass die so gerechnete Weite im Verlauf der Zeit variiert, wenn die genannte Vibration stattfindet, und dass die elektronische Einrichtung (3) dazu vorgesehen ist, eine elektrische Wechselspannung ($U_C$), die durch das atmosphärische elektrische Feld zwischen der ersten (13) und der zweiten (7) leitfähigen Fläche während der Vibration erzeugt wird, mit einer einstellbaren Schwellenspannung zu vergleichen, und dass die Vorrichtung darüber hinaus eine Einrichtung (4) aufweist, die ein Signal abgibt, wenn die genannte, einmal verarbeitete elektrische Spannung ($U_C$) die einstellbare Schwelle überschreitet, um dadurch ein Gewitter erkennen zu können.

2. Vorrichtung nach Anspruch 1, dadurch gekennzeichnet, dass die erste (13) und die zweite (7) leitfähige Fläche gegen eine vertikale Richtung gedreht sind.

3. Vorrichtung nach einem der Ansprüche 1 und 2, dadurch gekennzeichnet, dass die Vibrationseinrichtung (5, 6) mit zwei elektrischen Anschlüssen (16, 17) zur Zuführung eines elektrischen Wechselstroms durch Anlegen einer elektrischen Wechselspannung ($U_A$) an die Anschlüsse versehen ist und dass der eine (16) der zwei Anschlüsse elektrisch mit der ersten leitfähigen Oberfläche (13) verbunden ist und dass die genannte elektrische Wechselspannung ($U_C$), die durch das atmosphärische elektrische Feld erzeugt wird, zwischen der ersten (13) und der zweiten (7) leitfähigen Oberfläche abgenommen wird.

4. Vorrichtung nach Anspruch 3, dadurch gekennzeichnet, dass die elektronische Einrichtung (3) eine Einrichtung (30) zum Ermitteln der Phasendifferenz zwischen der elektrischen Wechselspannung (U$_A$), die zur Anlage an die Anschlüsse vorgesehen ist, und der elektrischen Wechselspannung (U$_C$), die von dem atmosphärischen elektrischen Feld erzeugt wird, vorgesehen ist, um das Vorzeichen dieses Feldes zu ermitteln.

5. Vorrichtung nach einem der Ansprüche 1 bis 4, dadurch gekennzeichnet, dass die elektronische Einrichtung (3) darüber hinaus eine Einrichtung (32) zum Speichern vorübergehender Änderungen der elektrischen Wechselspannung (U$_C$) aufweist, die von dem atmosphärischen elektrischen Feld hervorgerufen wird.

6. Vorrichtung nach einem der Ansprüche 1 bis 5, dadurch gekennzeichnet, dass die Vibrationseinrichtung von einer Magnetspule (6) und einem Permanentmagneten (5) gebildet ist, der dazu vorgesehen ist, die Spule (6) in der genannten gegebenen Richtung zum Schwingen zu bringen, wenn diese Spule mit dem genannten Wechselstrom versorgt wird, und dass die erste (13) und die zweite (7) Oberfläche fest mit der Spule bzw. dem Magneten derart verbunden sind, dass zwischen ihnen der genannte Abstand gebildet wird.

7. Vorrichtung nach Anspruch 6, dadurch gekennzeichnet, dass die Erkennungseinrichtung (2) von einem elektrodynamischen Lautsprecher gebildet wird, bestehend aus einer Magnetspule (6), einer Membran (8), die mit einer metallischen Beschichtung (13) versehen und mit dieser Spule (6) fest verbunden ist, einem elektrisch leitfähigen Korb (7) und einem Permanentmagneten (9), der fest mit dem Korb (7) verbunden und dazu vorgesehen ist, die Magnetspule (6) des Lautsprechers schwingen zu lassen, wenn diese mit dem elektrischen Wechselstrom versorgt wird, und dass die Vibrationseinrichtung (5, 6) von der Magnetspule (6) und dem Permanentmagneten (5) des Lautsprechers gebildet ist und dass die ersten und zweiten leitfähigen Oberflächen von der metallischen Beschichtung (13) bzw. dem Korb (7) gebildet sind.

8. Vorrichtung nach einem der Ansprüche 1 bis 7, dadurch gekennzeichnet, dass die Erkennungseinrichtung (2) in einem wasserdichten Behälter (24) angeordnet ist.